# EUROPÄISCHE PATENTSCHRIFT

(11) **EP 0 932 371 B1**
(45) Veröffentlichungstag und Bekanntmachung des Hinweises auf die Patenterteilung: **05.12.2001**
(21) Anmeldenummer: 97909288.9
(22) Anmeldetag: 18.09.1997
(51) Int. Cl.: A61C 15/02

(54) **INTERDENTALREINIGER UND VERFAHREN ZU SEINER HERSTELLUNG**
INTERDENTAL CLEANER AND MANUFACTURING PROCESS
NETTOYEUR INTERDENTAIRE ET MODE DE FABRICATION

(30) Priorität: 15.10.1996 DE 19642431
(43) Veröffentlichungstag der Anmeldung: 04.08.1999
(73) Patentinhaber: CORONET-WERKE GmbH, 69483 Wald-Michelbach (DE)
(72) Erfinder: WEIHRAUCH, Georg, D-69483 Wald-Michelbach (DE)
(74) Vertreter: Dipl.-Ing. Heiner Lichti Dipl.-Phys. Dr.rer.nat. Jost Lempert Dipl.-Ing. Hartmut Lasch
(86) Internationale Anmeldenummer: EP9705118
(87) Internationale Veröffentlichungsnummer: WO9816169

(56) Entgegenhaltungen:
- EP-A- 0 161 057
- EP-A- 0 707 836
- WO-A-87/06452

## Beschreibung

Die Erfindung betrifft einen Interdentalreinger bzw. einen Zahnstocher sowie ein Verfahren zur Herstellung eines entsprechenden Interdentalreinigers bzw. Zahnstochers.

Seit einiger Zeit ist es wissenschaftlich belegt, daß die Reinigung der Interdentalräume für die Gesunderhaltung des Gebisses und insbesondere des Zahnhalteapparates von besonderer Bedeutung ist, da Zahnfleischerkrankungen und auch die Erkrankungen des Zahnhalteapparates, die sogenannte Paradontitis, in den meisten Fällen von den Interdentalräumen ausgehen. Aus Ursache der Erkrankungen spielt dabei die mangelnde Reinigung der Interdentalräume eine entscheidende Rolle, wobei es bei fehlender Reinigung der Interdentalräume sogar zu Knochenauflösungsprozessen kommen kann.

Es hat sich gezeigt, daß die Interdentalräume mit Hand- oder Elektrozahnbürsten nicht ausreichend gereinigt werden können, so daß spezielle Reinigungsvorrichtungen verwendet werden müssen. Die seit langer Zeit bekannten Reinigungsfäden, beispielsweise Zahnseide, haben sich aufgrund ihrer relativ komplizierten Handhabung, ihrer nur relativ geringen Wirkungen und aufgrund der mit einer Falschanwendung verbundenen Risiken nicht durchgesetzt.

Zur Reinigung der Interdentalräume werden heute üblicherweise neben der oben genannten Zahnseide auch Interdentalreiniger in Form von Interdentalbürsten oder Zahnstochern verwendet, wobei letztere insbesondere für die Reinigung des leicht öffnenden Interdentalraumes zwischen Brückenankern und im Sulkusbereich Verwendung finden. Zahnstocher sind in unterschiedlichen Ausgestaltungen bekannt. Hölzerne Zahnstocher, sogenannte Zahnhölzer, dienen hauptsächlich zum Entfernen von Speiseresten aus den Interdentalräumen. Sie können dabei einen runden oder dreieckigen Querschnitt besitzen. Die runden, endseitig angespitzten Zahnhölzer eignen sich besonders zum Auswischen von Taschen. Der Bereich der Zahnkontaktpunkte kann mit einem Zahnholz nicht gereinigt werden, so daß hier weiterhin die Gefahr einer Kariesbildung besteht.

Des weiteren ist es bei Zahnhölzern nachteilig, daß sie aus Stabilitätsgründen aufgrund ihrer relativ geringen Biegesteifigkeiten einen Querschnitt bzw. Kerndurchmesser aufweisen müssen, der größer als die Öffnungen des leicht öffnenden Interdentalraums ist, so daß sie nicht in die Bereiche engen Querschnitts des Interdentalraums eindringen können.

Aus der EP 0 277 156 B1, WO 87/06452 und EP 0 202 296 B1 ist jeweils ein Interdentalreiniger in Form eines Zahnstochers bekannt, der einen aus Kunststoff oder Metall bestehenden. Träger aufweist, der zur Erhöhung der Reinigungswirkung zumindest bereichsweise mit kurzen Polymerfasern beflockt ist. Die Abmessungen des Zahnstochers können dabei so gewählt werden, daß auch enge Interdentalräume schonend gereinigt werden können. Es hat sich jedoch gezeigt, daß die die Beflockung bildenden Polymerfasern nicht abriebsicher auf dem Träger fixiert sind, so daß sie sich bei Gebrauch lösen können, was von dem Benutzer als ausgesprochen unangenehm empfunden wird. Darüber hinaus ist es nachteilig, daß die zusätzlich aufgebrachten Flockfasern relativ stark auftragen und somit der Zahnstocher übermäßig dick wird. Zahnstocher ohne die Beflockung besitzen jedoch gegenüber den genannten Zahnstochern mit Beflockung eine wesentlich geringere Reinigungswirkung. Beflockte Zahnstocher lassen sich aber nach Gebrauch nur unvollständig von in der Beflockung befindlichen Speiseresten oder Blut reinigen, weshalb sie in der Regel nur einmal verwendet werden können.

Gemäß der EP 0 277 156 B1 ist vorgesehen, die Beflockung mit reinigenden und/oder desinfizierenden Mitteln zu versehen. Diese haben jedoch nur eine kurzzeitige Wirkung, da die Flockfasern eine relativ große Oberfläche bei geringem Volumen besitzen, so daß die eingebrachten Mittel in kürzester Zeit aus dem Innenbereich der Flockfasern an deren Oberfläche migrieren und dort abgerieben oder ausgewaschen werden.

Aus der EP-A-0 161 057, von der im Oberbegriff der Ansprüche 1 und 21 ausgegangen wird, ist ein Interdentalreiniger bekannt, der einen stabförmigen Träger aus einem ersten Kunststoff-Material aufweist. Auf den Träger ist ein Überzug aus einem zweiten Kunststoff-Material aufgebracht, der außenseitig eine glatte Oberfläche bildet. An seinem einen Ende wird der Interdentalreiniger mit einer sich verjüngenden Spitze versehen, indem der Überzug zu diesem Ende verjüngend ausgebildet und der Träger in seinem an diesem Ende liegenden Randbereich angeschmolzen wird. Dieses Vorgehen ist sehr arbeitsaufwendig, wodurch die Herstellung des Interdentalreinigers relativ teuer ist.

Der Erfindung liegt die Aufgabe zugrunde, einen Interdentalreiniger und insbesondere einen Zahnstocher zu schaffen, der schnell und kostengünstig herstellbar ist. Darüber hinaus soll ein entsprechendes Verfahren geschaffen werden.

Hinsichtlich des Interdentalreinigers wird die Aufgabe durch die kennzeichnenden Merkmale des Anspruchs 1 gelöst. Der Interdentalreiniger weist einen länglichen, stabförmigen Träger aus einem ersten Kunststoff-Material auf, der in Teilbereichen seiner Oberfläche von zumindest einer Ein- oder Auflage aus einem zweiten Kunststoff-Material überdeckt ist, das weicher als das erste Kunststoff-Material ist. Dabei besteht das zweite Kunststoff-Material der Ein- oder Auflage aus eeinem thermoplastischen Elastomer und ist auf das erste Kunststoff-Material des Trägers aufgespritzt. Auf diese Weise ist ein Interdentalreiniger geschaffen, bei dem einerseits die Stabilität und andererseits die reinigende Wirkung von unterschiedlichen Komponenten oder Bauteilen bestimmt sind, so daß jede Komponente optimal auf ihre Funktion ausgerichtet werden kann. Die Stabilität des Interdentalreinigers wird im wesentlichen von dem länglichen, stabförmigen Träger bestimmt, der aus dem ersten Kunststoff-Material besteht. Als Kunststoff-Materialien für den Träger können vorzugsweise Polyamide, Polyolefine (z.B. PP/PE Homo-(Copolymere), Polyacetale (z.B. POM), Polyester (z.B. teilkristalline Formen-wie PETP, PBTP, LCP oder amorphe Formen wie PC), Fluorpolymere (z.B. PTFE), Polyphenylensulfide (z.B. PPS), Polyetherketone (z.B. PEEK), Schwefelpolymere (z.B. PSU, PESU), Styrolpolymerisate (z.B. PS, SB), Polymerblends (z.B. PPO), Polyurethane (z.B. PUR), Polyacrylate (z.B. PMMA), Polyimide (z.B. PEI, PAI) sowie Kombinationen der genannten Materialien Verwendung finden. Gegebenenfalls können diese Materialien auch mit einer Lang- und/oder Kurzglas-Faserverstärkung ausgerüstet sein. Es hat sich gezeigt, daß ein Träger geschaffen werden kann, der trotz relativ geringer Abmessungen sowohl ausreichend stabil als auch flexibel ist, so daß die Beschädigung von Schleimhäuten vermieden ist.

Die Reinigungswirkung wird bei dem erfindungsgemäßen Interdentalreiniger im wesentlichen durch die Ein- oder Auflage bestimmt. Wenn die reinigende Komponente als Auflage auf dem Träger ausgebildet ist, wird sie so dünn bzw. flach ausgestaltet, daß sie die Abmessungen und insbesondere die Dicke des Trägers nicht wesentlich erhöht. Vorzugsweise ist jedoch vorgesehen, daß die reinigende Komponente als Einlage in den Träger eingebettet ist. Dazu kann auf der Oberfläche des Trägers zumindest ein vorzugsweise großflächige Ausnehmung ausgebildet werden, in die das zweite Kunststoff-Material der Einlage eingebracht wird. Auf diese Weise kann erreicht werden, daß eine ausreichende Menge an zweitem Kunststoff-Material vorhanden ist, ohne daß die Abmessungen des Interdentalreinigers übermäßig groß werden.

Gemäß einer möglichen Ausgestaltung der Erfindung ist vorgesehen, daß das zweite Kunststoff-Material der Einlage genau die Ausnehmung ausfüllt, ohne aus dieser hervorzustehen. Somit folgt die Einlage der Kontur des Trägers und die Abmessungen des Interdentalreinigers stimmen mit denen des Träger überein.

Um sicherzustellen, daß das reinigende zweite Kunststoff-Material der Ein- oder Auflage mit dem zu reinigenden Interdentalbereich in Anlage kommt, kann alternativ auch vorgesehen sein, daß es über den Träger hervorsteht, was beispielsweise dadurch erreicht werden kann, daß die Ein- oder Auflage auf zumindest einer Seite eine Ausbauchung besitzt. Alternativ oder zusätzlich dazu kann auch auf der Oberfläche der Ein- oder Auflage eine Strukturierung ausgebildet sein, die die Reinigungswirkung erhöht und zusätzlich eine Massagewirkung ausübt.

Um scharfe Kanten und das daraus gegebenenfalls resultierende Problem des Festhakens des Interdentalreinigers zu vermeiden, ist in Weiterbildung der Erfindung vorgesehen, daß die Oberfläche der Ein- oder Auflage glatt in die benachbarten Oberflächenbereich des Trägers übergeht.

Da die Ein- oder Auflage zur Stabilität des Interdentalreinigers nicht beitragen muß, kann ihr Kunststoff-Material sehr weich und insbesondere weich-elastisch ausgebildet sein, wodurch eine schonende Reinigung des Interdentalraums zu erzielen ist. Darüber hinaus sind auf diese Weise eine leichte Einführbarkeit in enge Spalte, ein erhöhter Anpreßdruck mit guter Reinigungswirkung sowie eine einfache Herausziehbarkeit auch bei einem Verklemmen zwischen den Zähnen zu erzielen. Als zweites Kunststoff-Material für die Ein- oder Auflage findet deshalb ein thermoplastischer Elastomer Verwendung.

Eine erhöhte Oberflächenrauhigkeit des thermoplastischen Elastomers bewirkt eine verbesserte Reinigungswirkung unter Gewährleistung schonender Behandlung des im Bereich des Interdentalraumes vorherrschenden weichen Zahnmaterials (Dentin) sowie des Zahnfleisches, wobei die Reinigungswirkung aufgrund des sich bei Elastomeren einstellenden Radiereffektes (oberflächige Materialabtragung bei Reibung) unterstützt ist.

Sowohl das erste Kunststoff-Material des Trägers als auch das zweite Kunststoff-Material der Ein- oder Auflage können ein oder mehrere Additive enthalten. Dabei kann es sich beispielsweise um reinigungsunterstützend wirkende Füllmaterialien, wie abrasive oder nicht-abrasive Fasern (z.B. aus PPS), Mineralien oder amorph-gemahlende Silica-Abrasive oder auch um lebensmittelrechtlich zugelassene Aromen handeln. Darüber hinaus können medizinische Bestandteile wie beispielsweise Fluor, Xylid, antibakterielle Additive, zahnsteinreinigende Substanzen (NaF), Plaquebildung verhindernde Substanzen oder Antibiotika eingearbeitet werden. Aufgrund des erfindungsgemäß realisierten kleinen Oberflächen-/Volumenverhältnisses der Ein- oder Auflage wird gewährleistet, daß über eine längere Zeit wiederholt Additivanteile durch Migration sich an der Oberfläche anreichern und bei Gebrauch des Interdentalreinigers bzw. Zahnstochers abgetragen werden. Auf diese Weise ist eine langandauernde Wirksamkeit sichergestellt.

Die Querschnittsform des Trägers kann im wesentlichen beliebig, insbesondere oval, rund, dreieckig oder abgeflacht sein. Dabei sollte beachtet werden, daß die Querschnittsform insbesondere in den in den Interdentalraum eindringenden Abschnitten des Interdentalreinigers so gewählt wird, daß die Reinigung auch enger Interdentalräume gefahrlos möglich ist. Die Zunahme der Querschnittsfläche von der Spitze des Trägers ab sollte dementsprechend gewählt werden. In Längsrichtung kann der Träger entweder gerade verlaufen, in seinen Spitzenabschnitt abgewinkelt oder auch in sich gekrümmt sein. Auch die Querschnittsform der Ein- oder Auflage kann im wesentlichen beliebig gewählt werden, wobei auch hier insbesondere ovale, runde, abgeflachte oder dreieckige Formen Verwendung finden.

Die Ein- oder Auflage sollte vorzugsweise formschlüssig an dem Träger festgelegt werden. Da die Ein- oder Auflage aus Kunststoff besteht, kann sie auf den Träger aufgespritzt werden und dabei am Träger ausgebildete Hinterschneidungen und/oder Durchbrechungen hinter- bzw. durchgreifen. Es hat sich gezeigt, daß auf diese Weise eine dauerhafte Festlegung des zweiten Kunststoff-Materials an dem Träger erreicht werden kann, wobei auch eine nachträgliche -Sterilisierbarkeit des Interdentalreinigers möglich ist.

Zusätzlich kann vorgesehen sein, daß das aufgespritzte zweite Kunststoff-Material der Ein- oder Auflage mit dem ersten Kunststoff-Material des Trägers verschweißt ist, wodurch eine verbesserte Verbindung zwischen den Materialien zu erzielen ist. Als verschweißbare Materialkombinationen für den Träger und die Ein- oder Auflage kommen beispielsweise in Betracht: PP mit einem thermoplastischen Elastomer (TPE) auf der Basis von EPDM oder SEBS; Polystyrol mit TPE auf der Basis von SEBS; PP oder PE oder Polyamid mit einem Ionomer oder Acrylsäureester.

Um das Einführen des Interdentalreinigers in den Interdentalraum zu erleichtern, sollte er und somit der Träger sich zum vorderen Ende hin verjüngen. Dabei kann das vordere Ende spitz zulaufen oder auch abgerundet sein.

Die Ein- oder Auflage kann sich am Träger bis zu dessen vorderem Ende erstrecken. Als besonders vorteilhaft hat es sich jedoch erwiesen, wenn die Ein- oder Auflage von dem vorderen Ende des Trägers zurückgesetzt ist. Auf diese Weise kann aus dem ersten Material des Trägers eine besonders dünne und stabile Spitze ausgebildet werden, die das Einführen in den Interdentalraum erleichtert.

Um einem Benutzer die Handhabung und insbesondere das Ergreifen des Interdentalreinigers zu erleichtern, sollte der Träger an seinem hinteren Ende einen Griffabschnitt aufweisen, der eine verbreiterte Grifffläche besitzt. Der Griffabschnitt kann einstückig an dem Träger angeformt sein, alternativ ist es jedoch auch möglich, den Griffabschnitt als separates Bauteil auszubilden, an dem der Träger in lösbarer Weise anbringbar ist. Somit kann der Griffabschnitt wiederverwendet und bei Bedarf mit einem Interdentalreiniger bestückt werden.

Ein Abrutschen der Finger des Benutzers von dem Griffabschnitt des Interdentalreinigers läßt sich verhindern, wenn der Griffabschnitt mit einer als Griffhilfe dienenden Strukturierung versehen ist. Die Strukturierung besteht vorzugsweise aus einem weichen Kunststoff-Material, wozu insbesondere das zweite Kunststoff-Material der Ein- und Auflage verwendet werden kann, das bei Herstellung der Ein- oder Auflage auch auf den Griffabschnitt aufgebracht und aufgespritzt wird. Zusätzlich ist es möglich, die Strukturierung des Griffabschnittes als Informationsträger beispielsweise bezüglich des Herstellers, des Produktnamens oder der Produkteigenschaften zu verwenden.

Hinsichtlich des Verfahrens wird die oben genannte Aufgabe dadurch gelöst, daß das zweite Kunststoff-Material der Ein- oder Auflage ein thermoplastisches Elastomer ist und auf das erste Kunststoff-Material des Trägers aufgespritzt wird. Es findet somit ein Zwei-Komponenten-Verfahren Verwendung, bei dem die Abstützung und Positionierung des relativ dünnen, den Träger bildenden Kerns durch die die zweite Komponente bildende Ein- oder Auflage hindurch erfolgen kann, um ein Verbiegen des Trägers zu vermeiden. Zur Abstützung des Trägers können Halteelemente, beispielsweise Haltestifte, verwendet werden, die das zweite Kunststoff-Material der Ein- oder Auflage durchgreifen, so daß in dieser Löcher, Schlitze oder Durchbrüche verbleiben, die die Verformbarkeit der Ein- oder Auflage erhöhen und zusätzliche Reinigungskanten bilden. Gegebenenfalls kann das aufgespritzte zweite Kunststoff-Material der Ein- oder Auflage zusätzlich auch mit dem ersten Kunststoff-Material des Trägers während des Aufspritzvorgangs verschweißt werden.

Weitere Einzelheiten und Merkmale der Erfindung sind aus der folgenden Beschreibung von Ausführungsbeispielen unter Bezugnahme auf die beigefügte Zeichnung ersichtlich. Es zeigen:
- Figur 1a: einen Träger vor der Anbringung der Einlage,
- Figur 1b: einen Interdentalreiniger gemäß einem 1. Ausführungsbeispiel der Erfindung in Seitenansicht,
- Figur 1c: eine Aufsicht des Interdentalreinigers gemäß Figur 1b,
- Figur 1d: den Schnitt I-I in Figur 1b,
- Figur 1e: den Schnitt II-II in Figur 1b,
- Figuren 2a, 2b: einen Interdentalreiniger gemäß einem 2. Ausführungsbeispiel in Seitenansicht und Aufsicht,
- Figuren 3a, 3b: einen Interdentalreiniger gemäß einem 3. Ausführungsbeispiel in Seitenansicht und Aufsicht,
- Figuren 4a, 4b: einen Interdentalreiniger gemäß einem 4. Ausführungsbeispiel in Seitenansicht und Aufsicht,
- Figuren 5a, 5b: einen Interdentalreiniger gemäß einem 5. Ausführungsbeispiel in Seitenansicht und Aufsicht,
- Figuren 6a, 6b: einen Interdentalreiniger gemäß einem 6. Ausführungsbeispiel in Seitenansicht und Aufsicht,
- Figuren 7a, 7b: einen Interdentalreiniger gemäß einem 7. Ausführungsbeispiel in Seitenansicht und Aufsicht,
- Figuren 8a, 8b: einen Interdentalreiniger gemäß einem 8. Ausführungsbeispiel in Seitenansicht und Aufsicht,
- Figuren 9a, 9a: einen Interdentalreiniger gemäß einem 9. Ausführungsbeispiel in Seitenansicht und Aufsicht,
- Figuren 10a, 10b: einen Interdentalreiniger gemäß einem 10. Ausführungsbeispiel in Seitenansicht und Aufsicht, und
- Figur 11: eine Anordnung von mehreren Interdentalreinigern zu einem zusammenhängenden Set.

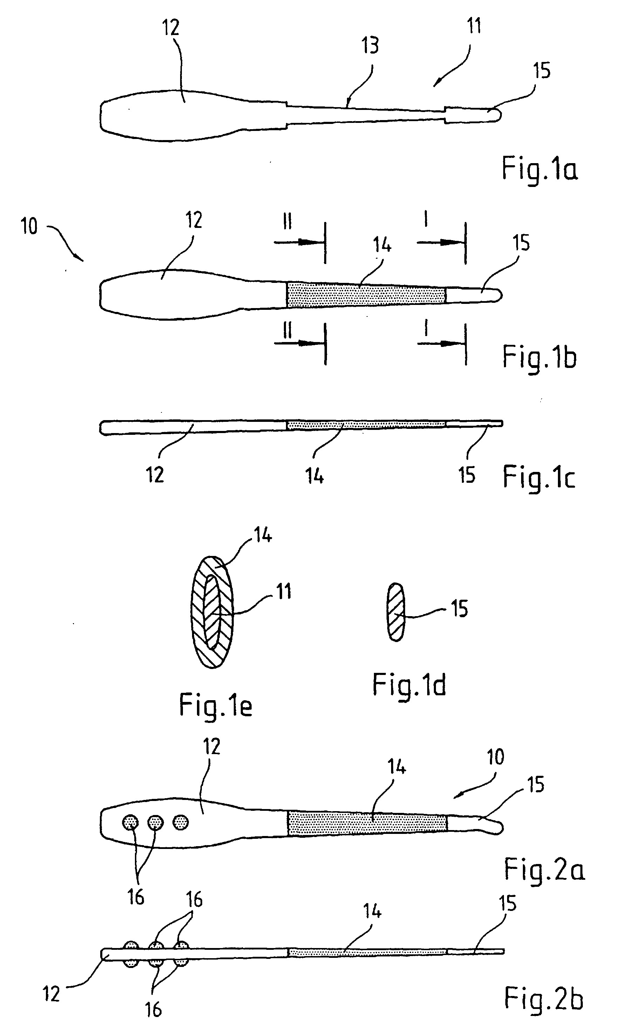

Die Figuren 1a bis 1e zeigen einen länglichen, stabförmigen Träger 11 aus einem stabilen ersten Kunststoff-Material, der sich in Längsrichtung zum vorderen Ende 15 hin sowohl hinsichtlich seiner Höhe als auch seiner Dicke leicht konisch verjüngt und am vorderen Ende 15 abgerundet ist. Der Träger 11 besitzt einen langgestreckt ovalen Querschnitt, wie insbesondere Figur 1d zeigt. Am entgegengesetzten hinteren Ende weist der Träger 11 eine als Griffabschnitt 12 dienende Verbreiterung auf.

In einem gewissen Abstand versetzt vom vorderen Ende 15 besitzt der Träger 11 einen Bereich verringerter Abmessungen, so daß eine umlaufende Ausnehmung 13 gebildet ist. Zur Bildung eines in den Figuren 1b und 1c dargestellten Interdentalreinigers 10 wird die Ausnehmung 13 mit einer aus einem zweiten Kunststoff-Material bestehenden Einlage 14 derart ausgefüllt, daß zwischen dem Träger 11 und der Einlage 14 allseitig ein glatter, kontinuierlicher Übergang unter Vermeidung von Absätzen oder Kanten erreicht ist. Das zweite Kunststoff-Material der Einlage 14 ist weicher als das erste Kunststoff-Material des Trägers 11 und speziell auf die Erzielung einer bestmöglichen Reinigungswirkung gegebenenfalls durch entsprechende Additive abgestimmt.

Figur 1e zeigt, daß die Einlage 14 den Träger 11 im Bereich der Ausnehmung 13 vollständig umgibt und somit sicher auf diesem gehalten ist.

Das in den Figuren 2a und 2b dargestellte 2. Ausführungsbeispiel weist den gleichen grundsätzlichen Aufbau wie der Interdentalreiniger gemäß dem 1. Ausführungsbeispiel auf und unterscheidet sich von diesem dadurch, daß das vordere Ende 15 des Trägers 11 leicht abgewinkelt ist, um es besser in den Interdentalraum einführen zu können. Darüber hinaus ist auf den Griffabschnitt 12 eine Strukturierung 16 aufgebracht, die aus dem zweiten Kunststoff-Material der Einlage 14 besteht und als Griffhilfe bei dem Gebrauch des Interdentalreinigers 10 dient.

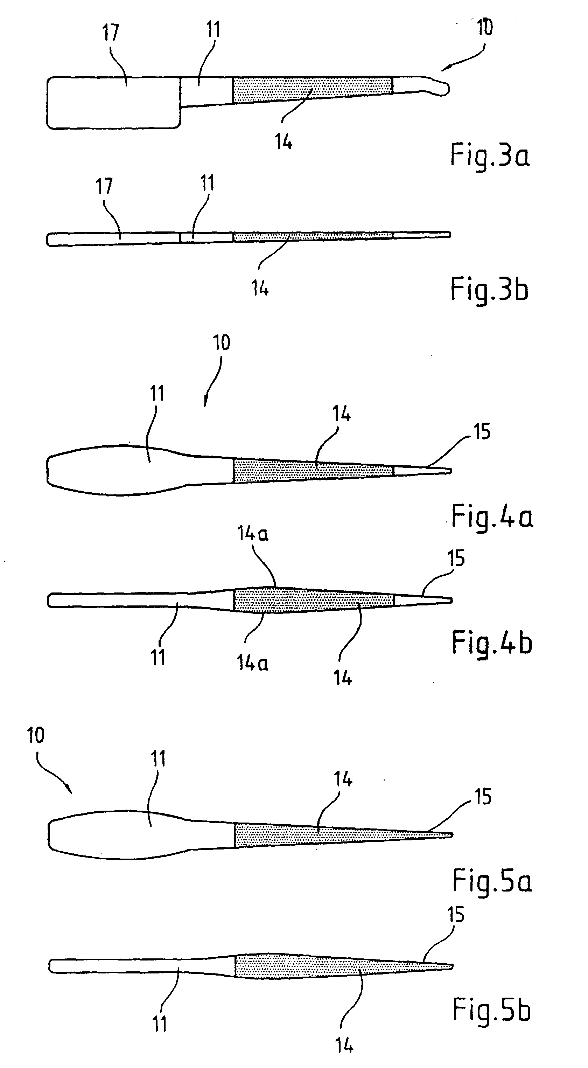

Bei den beiden vorgenannten Ausführungsbeispielen war der Griffabschnitt 12 jeweils einstückig an dem Träger 11 angeformt. Das in den Figuren 3a und 3b dargestellte Ausführungsbeispiel zeigt ein wiederverwendbaren Griffabschnitt 17, an dem der Träger 11 mit seinem hinteren Ende in nicht näher dargestellter, lösbarer Weise anbringbar und insbesondere einsteckbar oder einrastbar ist. Nach ein- oder mehrmaligem Gebrauch des Interdentalreinigers 10 kann der Griffabschnitt 17 mit einem neuen Träger 11 bestückt werden.

Auch der in den Figuren 4a und 4b dargestellte Interdentalreiniger 10 weist den grundsätzlichen Aufbau gemäß dem 1. Ausführungsbeispiel auf, wobei hier jedoch der Träger 11 am vorderen Ende 15 spitz zuläuft. Darüber hinaus wölbt sich die Einlage 14 seitlich über die Kontur des Trägers 11 hinaus und bildet auf entgegengesetzten Seiten jeweils eine Ausbauchung 14a, womit gewährleistet ist, daß die Einlage 14 bei Einschieben des Interdentalreinigers 10 in den zu reinigenden Interdentalraum mit den zu reinigenden Bereichen in Kontakt kommt.

Der in den Figuren 5a und 5b dargestellte Interdentalreiniger 10 entspricht im wesentlichen dem Interdentalreiniger gemäß den Figuren 4a und 4b, wobei jedoch die Einlage 14 sich bis zum vorderen Ende 15 des Trägers 11 erstreckt und diese vollständig umgibt. Die Einlage 14 ist dabei in nicht dargestellter formschlüssiger Weise, beispielsweise mit Hinterschneidungen oder Durchbrechungen auf dem Träger 11 gehalten.

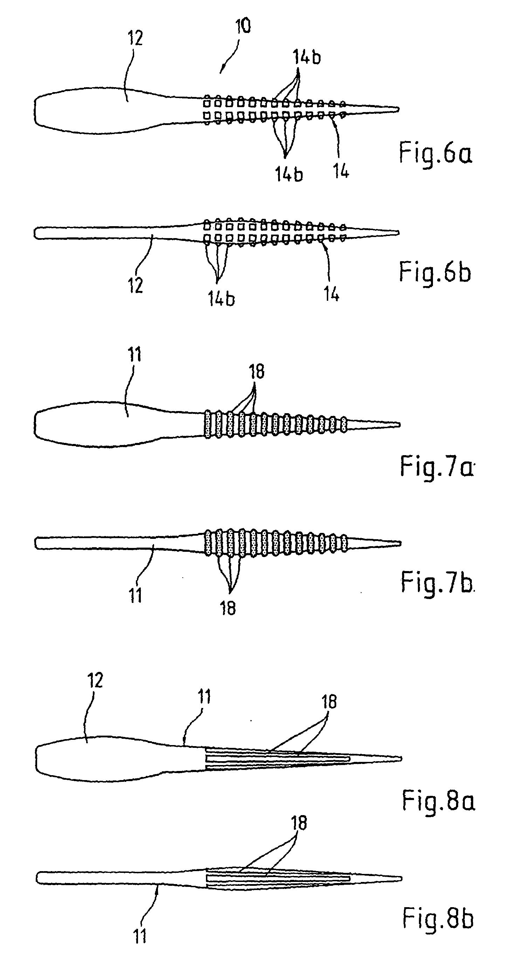

Auch das Ausführungsbeispiel eines Interdentalreinigers 10 gemäß den Figuren 6a und 6b entspricht im wesentlichen dem der Figuren 4a und 4b, wobei jedoch auf der Außenoberfläche der Einlage 14 eine Strukturierung in Form von versetzt angeordneten punkt- oder noppenartigen Erhebungen 14b ausgebildet ist, die über den gesamten Umfang verteilt sind. Die Strukturierung erhöht die Reinigungswirkung und übt gleichzeitig einen Massageeffekt aus. Alternativ könnte die Strukturierung auch von mehreren in Längsrichtung des Trägers 11 hintereinander angeordneten, hervorstehenden Ringen gebildet sein, die sich über den gesamten Umfang oder nur über einen Teilbereich des Umfangs erstrecken und somit in Umfangsrichtung eine Diskontinuität besitzen.

Während bei dem Interdentalreiniger gemäß den Figuren 6a und 6b die Oberfläche der Einlage 14 strukturiert ist, sind bei dem Interdentalreiniger gemäß den Figuren 7a und 7b mehrere ringförmige Einlagen 18 angeordnet. Der Träger 11 besitzt in seiner Längsrichtung hintereinander angeordnete ringförmige Ausnehmungen, in die jeweils eine Einlage 18 aus dem weicheren zweiten Kunststoff-Material eingebettet ist. Beim Einführen des Interdentalreinigers 10 in den zu reinigenden Interdentalraum wechseln sich somit jeweils immer eine Einlage 18 und der daran anschließende Bereich 11 des Trägers ab. Die Einlagen 18 stehen über die Oberfläche des Trägers 11 um ein geringes Maß hervor, wodurch die Reinigungs- und Massagewirkung erhöht ist.

In Abwandlung von dem vorgenannten Ausführungsbeispiel sind bei dem Interdentalreiniger gemäß den Figuren 8a und 8b mehrere in Längsrichtung des Trägers 11 verlaufende Einlagen 18 vorgesehen, die über den Umfang des Trägers 11 vorzugsweise gleich verteilt sind.

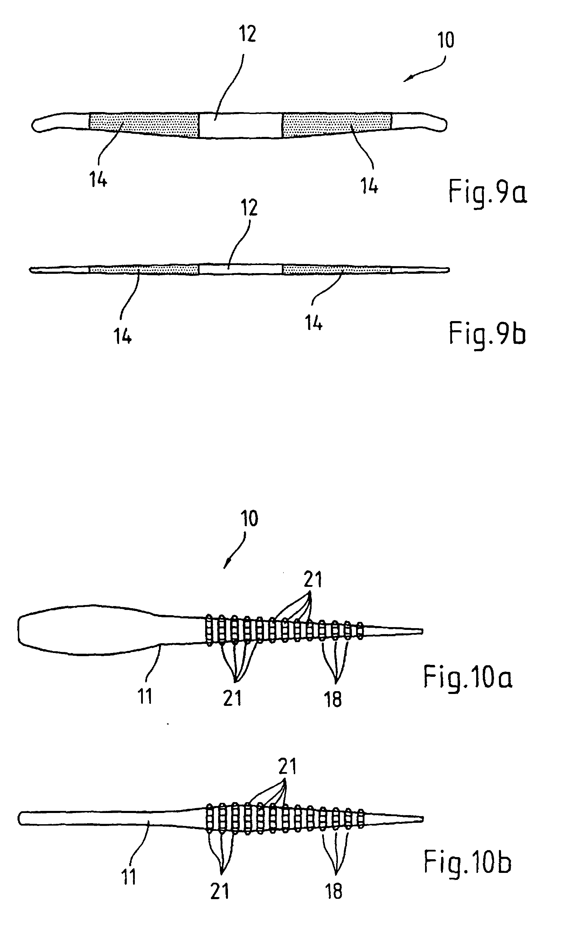

Die Figuren 9a und 9b zeigen einen Interdentalreiniger 10, der einen mittigen Griffabschnitt 12 besitzt und wahlweise mit einem seiner beiden Enden in einen Interdentalraum eingeführt werden kann. Zu beiden Seiten des Griffabschnittes 12 ist eine Einlage 14 in genannter Weise angeordnet. Da der Interdentalreiniger 10 vom Benutzer wahlweise mit dem einen oder dem anderen Ende in den Interdentalraum eingeführt werden kann, können Einlagen 14 aus verschiedenen Materialien und/oder mit verschiedenen Additiven Verwendung finden.

Der Interdentalreiniger gemäß den Figuren 10a und 10b unterscheidet sich von dem Ausführungsbeispiel gemäß den Figuren 7a und 7b lediglich dadurch, daß die umlaufenden ringförmigen Einlagen 18 zusätzlich mit einer äußeren Strukturierung in Form von Noppen 21 versehen sind.

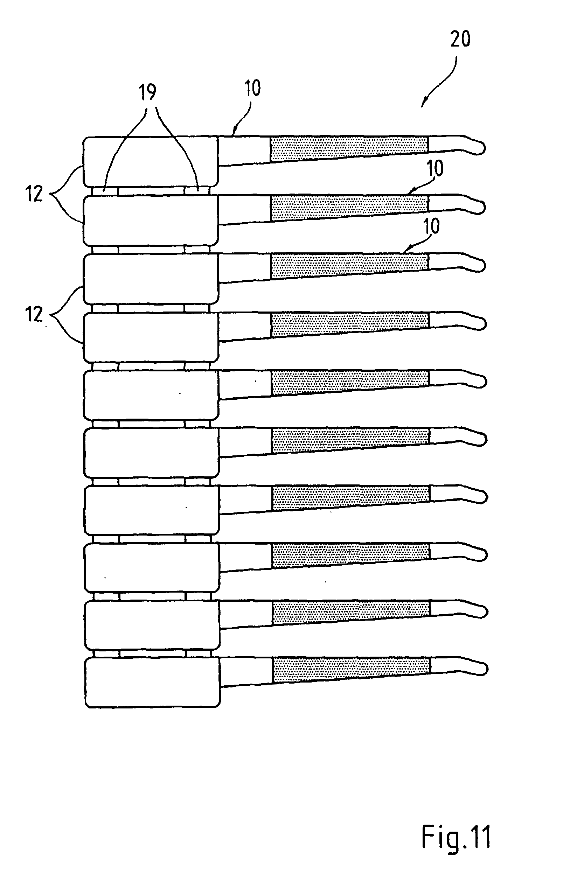

Die Interdentalreiniger können jeweils als Einzelstücke vertrieben werden, es ist jedoch auch möglich, eine Vielzahl von Interdentalreinigern 10 in der in Figur 11 gezeigten Weise zu einem Set 20 zusammenzufassen. Dabei sind die Interdentalreiniger 10 in gleicher Ausrichtung nebeneinander angeordnet, wobei ihre Griffteile 12 über leicht abbrechbare Stege 19 miteinander verbunden sind. Wenn ein Benutzer einen Interdentalreiniger 10 benötigt, löst er den außenliegenden Interdentalreiniger durch Brechen der Stege 19 aus dem Verbund heraus, wodurch der Interdentalreiniger vereinzelt ist und benutzt werden kann.

## Patentansprüche

1. Interdentalreiniger (10) mit einem länglichen, stabförmigen Träger (11) aus einem ersten Kunst-stoff-Material, der mindestens in Teilbereichen seiner Oberfläche von zumindest einer Ein- oder Auflage (14; 18) zur Reinigung der Interdentalräume aus einem zweiten Kunststoff-Material überdeckt ist, **dadurch gekennzeichnet daß** das zweite Kunststoff- Material der Ein- oder Auflage (14; 18), das weicher als das erste Kunststoff-Material ist, aus einem thermoplastischen Elastomer besteht und auf das erste Kunststoff-Material des Trägers (11) aufgespritzt ist.

2. Interdentalreiniger nach Anspruch 1, **dadurch gekennzeichnet, daß** das erste Kunststoff-Material des Trägers (11) faserverstärkt ist.

3. Interdentalreiniger nach Anspruch 1 oder 2, **dadurch gekennzeichnet, daß** das zweite Kunststoff-Material der aufgespritzten Ein- oder Auflage (14; 18) mit dem ersten Kunststoff-Material des Trägers (11) verschweißt ist.

4. Interdentalreiniger nach einem der Ansprüche 1 bis 3, **dadurch gekennzeichnet, daß** die Oberfläche der Ein- oder Auflage (14; 18) glatt in die benachbarten Oberflächenbereiche des Trägers (11) übergeht.

5. Interdentalreiniger nach einem der Ansprüche 1 bis 4, **dadurch gekennzeichnet, daß** die Ein- oder Auflage (14; 18) der Kontur des Trägers (11) folgt.

6. Interdentalreiniger nach einem der Ansprüche 1 bis 5, **dadurch gekennzeichnet, daß** die Ein- oder Auflage (14; 18) auf zumindest einer Seite eine Ausbauchung (14a) besitzt.

7. Interdentalreiniger nach einem der Ansprüche 1 bis 6, **dadurch gekennzeichnet, daß** die Einlage (14) in einer in dem Träger (11) ausgebildeten Ausnehmung (13) angeordnet ist.

8. Interdentalreiniger nach einem der Ansprüche 1 bis 7, **dadurch gekennzeichnet, daß** die Ein- oder Auflage (14; 18) formschlüssig an dem Träger (11) gehalten ist.

9. Interdentalreiniger nach einem der Ansprüche 1 bis 8, **dadurch gekennzeichnet, daß** der Träger (11) von dem zweiten Kunststoff-Material der Ein- oder Auflage (14; 18) durchdrungene Durchbrechungen und/oder hintergriffene Hinterschneidungen besitzt.

10. Interdentalreiniger nach einem der Ansprüche 1 bis 9, **dadurch gekennzeichnet, daß** der Träger (11) sich zu seinem vorderen Ende (15) hin verjüngt.

11. Interdentalreiniger nach Anspruch 10, **dadurch gekennzeichnet, daß** der Träger (11) an seinem vorderen Ende spitz zuläuft.

12. Interdentalreiniger nach einem der Ansprüche 1 bis 11, **dadurch gekennzeichnet, daß** die Ein- oder Auflage (14; 18) von dem vorderen Ende (15) des Trägers (11) zurückgesetzt ist.

13. Interdentalreiniger nach einem der Ansprüche 1 bis 11, **dadurch gekennzeichnet, daß** die Ein- oder Auflage (14; 18) sich bis zum vorderen Ende des Trägers (11) erstreckt.

14. Interdentalreiniger nach einem der Ansprüche 1 bis 13, **dadurch gekennzeichnet, daß** die Ein- oder Auflage (14) auf ihrer Oberfläche eine Strukturierung (14b, 14c) aufweist.

15. Interdentalreiniger nach Anspruch 14, **dadurch gekennzeichnet, daß** die Strukturierung noppen- oder borstenartig ist.

16. Interdentalreiniger nach einem der Ansprüche 1 bis 15, **dadurch gekennzeichnet, daß** der Träger (11) an seinem hinteren Ende einen Griffabschnitt (12) aufweist.

17. Interdentalreiniger nach einem der Ansprüche 1 bis 15, **dadurch gekennzeichnet, daß** an dem Träger (11) ein Griffabschnitt (17) in lösbarer Weise anbringbar ist.

18. Interdentalreiniger nach einem der Ansprüche 1 bis 17, **dadurch gekennzeichnet, daß** das erste Kunststoff-Material des Trägers (11) und/oder das zweite Kunststoff-Material der Ein- oder Auflage (14; 18) ein oder mehrere Additive enthält.

19. Interdentalreiniger nach einem der Ansprüche 1 bis 18, **dadurch gekennzeichnet, daß** der Griffabschnitt (12; 17) mit einer als Griffhilfe und/oder als Informationsträger dienenden Strukturierung (16) versehen ist.

20. Interdentalreiniger nach Anspruch 19, **dadurch gekennzeichnet, daß** die Strukturierung (16) aus dem zweiten Kunststoff-Material besteht.

21. Verfahren zur Herstellung eines Interdentalreinigers, insbesondere Zahnstochers, der einen länglichen, stabförmigen Träger (11) aus einem ersten Kunststoff-Material besitzt, der mindestens in Teilbereichen seiner Oberflächen von zumindest einer Ein- oder Auflage (14; 18) zur Reinigung der Interdentalräume aus einem zweiten Kunststoff-Material überdeckt wird, **dadurch gekennzeichnet, daß** das zweite Kunststoff-Material der Ein- oder Auflage (14; 18) ein thermoplastisches Elastomer ist und auf das erste Kunststoff-Material des Trägers (11) aufgespritzt wird.

22. Verfahren nach Anspruch 21, **dadurch gekennzeichnet, daß** das zweite aufgespritzte Kunststoff-Material der Ein- oder Auflage (14; 18) mit dem ersten Kunststoff-Material des Trägers (11) während des Aufspritzvorgangs verschweißt wird.

23. Verfahren nach Anspruch 21 oder 22, **dadurch gekennzeichnet, daß** der Träger (11) bei Aufbringung des zweiten Kunststoff-Materials der Ein- oder Auflage mittels durch diese hindurchgreifende Halteelemente abgestützt wird.

## Claims

1. Interdental cleaner (10) with an elongated, rod-like carrier (11) made from a first plastics material, which is covered, at least in partial areas of its surface, by at least one insert or overlay (14;18) for cleaning of interdental spaces made from a second plastics material, **characterized in that** the second plastics material of the insert or overlay (14;18), which is softer than the first plastics material, is made from a thermoplastic elastomer and is injection moulded onto the first plastics material of the carrier (11).

2. Interdental cleaner according to claim 1, **characterized in that** the first plastics material of the carrier (11) is fibre-reinforced.

3. Interdental cleaner according to claim 1 or 2, **characterized in that** the second plastics material of the injection moulded insert or overlay (14;18) is welded to the first plastics material of the carrier (11).

4. Interdental cleaner according to one of the claims 1 to 3, **characterized in that** the surface of the insert or overlay (14;18) passes smoothly into the adjacent surface areas of the carrier (11).

5. Interdental cleaner according to one of the claims 1 to 4, **characterized in that** the insert or overlay (14;18) follows the contour of the carrier (11).

6. Interdental cleaner according to one of the claims 1 to 5, **characterized in that** the insert or overlay (14;18) has a bulge (14a) on at least one side.

7. Interdental cleaner according to one of the claims 1 to 6, **characterized in that** the insert (14) is placed in a recess (13) formed in the carrier (11).

8. Interdental cleaner according to one of the claims 1 to 7, **characterized in that** the insert or overlay (14;18) is held on the carrier (11) in a positive fit.

9. Interdental cleaner according to one of the claims 1 to 8, **characterized in that** the carrier (11) has openings and/or undercuts penetrated or back-engaged by the second plastics material of the insert or overlay (14;18).

10. Interdental cleaner according to one of the claims 1 to 9, **characterized in that** the carrier (11) tapers to its front end (15).

11. Interdental cleaner according to claim 10, **characterized in that** the front end of the carrier (11) tapers to a point.

12. Interdental cleaner according to one of the claims 1 to 11, **characterized in that** the insert or overlay (14:18) is set back from the front end (15) of the carrier (11).

13. Interdental cleaner according to one of the claims 1 to 11, **characterized in that** the insert or overlay (14:18) extends to the front end (15) of the carrier (11).

14. Interdental cleaner according to one of the claims 1 to 13, **characterized in that** the surface of the insert or overlay carries a structuring (14b,14c).

15. Interdental cleaner according to claim 14, **characterized in that** the structuring is knob- or bristle-like.

16. Interdental cleaner according ton one of the claims 1 to 15, **characterized in that** the rear end of the carrier (11) has a handle (12).

17. Interdental cleaner according to one of the claims 1 to 15, **characterized in that** a handle (17) is detachably fittable to the carrier (11).

18. Interdental cleaner according to one of the claims 1 to 17, **characterized in that** the first plastics material of the carrier (11) and/or the second plastics material of the insert or overly (14;18) contains one or more additives.

19. Interdental cleaner according to one of the claims 1 to 18, **characterized in that** the handle (12;17) is provided with a structuring (16) serving as a gripping aid and/or as an information carrier.

20. Interdental cleaner according to claim 19, **characterized in that** the structuring (16) is made from the second plastics material.

21. Process for the production of an interdental cleaner, particularly a tooth-pick having an elongated rod-shaped carrier (11) made from a first plastics material covered at least in portions of its surface by at least one insert or overlay (14;18) for cleaning of interdental spaces made from a second plastics material, **characterized in that** the second plastics material of the insert or overlay (14;18) is a thermoplastic elastomer injection moulded onto the first plastics material of the carrier (11).

22. Process according to claim 21, **characterized in that** the second injection moulded plastics material of the insert or overlay (14;18) is welded to the first plastics material of the carrier (11) during the injection moulding procedure.

23. Process according to claim 21 or 22, **characterized in that** during the application of the second plastics material of the insert or overlay, the carrier (11) is supported by means of retaining elements passing through the insert or overlay.

## Revendications

1. Nettoyeur interdentaire (10) comprenant un support (11) allongé en forme de barre réalisé dans une première matière synthétique, recouvert au moins dans des zones partielles de sa surface d'au moins une garniture ou revêtement (14, 18) pour le nettoyage des espaces interdentaux, réalisé(e) dans une deuxième matière synthétique, **caractérisé en ce que** la deuxième matière synthétique de la garniture ou du revêtement (14, 18), plus souple que la première matière synthétique, consiste en un élastomère thermoplastique et **en ce qu'**elle est pulvérisée sur la première matière synthétique du support (11).

2. Nettoyeur interdentaire selon la revendication 1, **caractérisé en ce que** la première matière synthétique du support (11) est renforcée par des fibres.

3. Nettoyeur interdentaire selon la revendication 1 ou 2, **caractérisé en ce que** la deuxième matière synthétique de la garniture ou du revêtement (14, 18) pulvérisé(e) est soudée au premier matériau synthétique du support (11).

4. Nettoyeur interdentaire selon l'une quelconque des revendications 1 à 3, **caractérisé en ce que** la surface de la garniture ou du revêtement (14, 18) se prolonge à niveau dans les zones de surface adjacentes du support (11).

5. Nettoyeur interdentaire selon l'une quelconque des revendications 1 à 4, **caractérisé en ce que** la garniture ou le revêtement (14, 18) suit le profil du support (11).

6. Nettoyeur interdentaire selon l'une quelconque des revendications 1 à 5, **caractérisé en ce que** la garniture ou le revêtement (14, 18) présente un renflement (14a) au moins sur une face.

7. Nettoyeur interdentaire selon l'une quelconque des revendications 1 à 6, **caractérisé en ce que** la garniture (14) est logée dans un évidement (13) ménagé dans le support (11).

8. Nettoyeur interdentaire selon l'une quelconque des revendications 1 à 7, **caractérisé en ce que** la garniture ou le revêtement (14, 18) est maintenue au support (11) par ajustement de forme.

9. Nettoyeur interdentaire selon l'une quelconque des revendications 1 à 8, **caractérisé en ce que** le support (11) présente des perçages traversés par la deuxième matière synthétique de la garniture ou du revêtement (14, 18) et/ou des formes en contre-dépouilles entourées à maintien par ce matériau.

10. Nettoyeur interdentaire selon l'une quelconque des revendications 1 à 9, **caractérisé en ce que** le support (11) se rétrécit en direction de son extrémité avant (15).

11. Nettoyeur interdentaire selon la revendication 10, **caractérisé en ce que** le support (11) s'effile en pointe à son extrémité avant.

12. Nettoyeur interdentaire selon l'une quelconque des revendications 1 à 11, **caractérisé en ce que** la garniture ou le revêtement (14, 18) est situé(e) en retrait par rapport à l'extrémité avant (15) du support (11).

13. Nettoyeur interdentaire selon l'une quelconque des revendications 1 à 11, **caractérisé en ce que** la garniture ou le revêtement (14, 18) s'étend jusqu'à l'extrémité avant du support (11).

14. Nettoyeur interdentaire selon l'une quelconque des revendications 1 à 13, **caractérisé en ce que** la garniture ou le revêtement (14) présente à sa surface une structuration (14b, 14c).

15. Nettoyeur interdentaire selon la revendication 14, **caractérisé en ce que** la structuration est du type boutons de fibres ou poils.

16. Nettoyeur interdentaire selon l'une quelconque des revendications 1 à 15, **caractérisé en ce que** le support (11) présente une partie préhensile (12) à son extrémité arrière.

17. Nettoyeur interdentaire selon l'une quelconque des revendications 1 à 15, **caractérisé en ce qu'**une partie préhensile (17) peut être montée détachable du support (11).

18. Nettoyeur interdentaire selon l'une quelconque des revendications 1 à 17, **caractérisé en ce que** la première matière synthétique du support (11) et/ou la deuxième matière synthétique de la garniture ou du revêtement (14, 18) contient un ou plusieurs additifs.

19. Nettoyeur interdentaire selon l'une quelconque des revendications 1 à 18, **caractérisé en ce que** la partie préhensile (12, 17) présente une structuration (16) servant d'assistance à la préhension ou de support d'information.

20. Nettoyeur interdentaire selon la revendication 19, **caractérisé en ce que** la structuration (16) est réalisée dans la deuxième matière synthétique.

21. Procédé de fabrication d'un nettoyeur interdentaire, en particulier un cure-dents, comprenant un support (11) allongé en forme de barre réalisé dans une première matière synthétique, recouvert au moins dans des zones partielles de sa surface d'au moins une garniture ou revêtement (14, 18) pour le nettoyage des espaces interdentaux, réalisé(e) dans une deuxième matière synthétique, **caractérisé en ce que** la deuxième matière synthétique de la garniture ou du revêtement (14, 18) consiste en un élastomère thermoplastique et **en ce qu'**elle est pulvérisée sur la première matière synthétique du support (11).

22. Procédé selon la revendication 21, **caractérisé en ce que** la deuxième matière synthétique pulvérisée de la garniture ou du revêtement (14, 18) est soudée à la première matière synthétique du support (11) durant le pistolage.

23. Procédé selon la revendication 21 ou 22, **caractérisé en ce que** durant l'application de la deuxième matière synthétique de la garniture ou du revêtement, le support (11) est soutenu par des éléments de maintien traversant celui ou celle-ci.
